# EUROPEAN PATENT SPECIFICATION

(11) **EP 3 254 559 B1**
(45) Date of publication and mention of the grant of the patent: **22.09.2021**
(21) Application number: 16382265.3
(22) Date of filing: 10.06.2016
(51) Int. Cl.: A01M 1/02, A01M 1/10, A01M 1/20

(54) **INSECT TRAP**
INSEKTENFALLE
PIÈGE À INSECTES

(43) Date of publication of application: 13.12.2017
(73) Proprietor: SEDQ HEALTHY CROPS, S.L., 08005-Barcelona (ES)
(72) Inventor: COLL KLEIN, Francis, 08005 - Barcelona (ES)
(74) Representative: Herrero & Asociados, S.L.

(56) References cited:
- WO-A1-2007/068329
- US-A1- 2008 196 296
- US-A1- 2009 126 257

## Description

The present invention relates to an insect trap formed by a container having holes to lure insects into its interior.

### Background of the invention

The current insect pest problem is known, particularly in the import and export of fruit and vegetables. These transported products may be carriers of insect species or larvae thereof. Some of these species easily adapt to the new environment and end up becoming agricultural pests.

In order to solve this insect pest problem, organic pest control methods are commonly used in farms and particularly in fruit tree crops. Traditional spraying of crops has been gradually replaced by mass trapping techniques. Trapping consists of luring the insect towards a container of a closed trap baited with pheromones and/or food.

Once the insect is inside the receptacle it cannot find the exit. Additionally, an insecticide is added to the interior of these traps which is in charge of killing the insect once it has entered the receptacle.

An insect trap of this type has been disclosed by document WO2012164132A1, wherein the receptacle is formed by a lamina with holes for the entrance of insects. This lamina must be arranged conically such that the holes are inclined with respect to the base of said cone. This trap is designed to be used hanging from a hook.

The trap described in this document has the drawback that it must be assembled to form the trap, which requires a significant amount of time.

Utility model ES 1 060 039 U is an insect trap wherein the receptacle is formed from a single moulded part, which is closed by means of a lid. In this trap, the holes are arranged parallel with respect to the bottom of the receptacle high up in the receptacle, near the lid.

The trap described in this document has the drawback that it prevents the correct circulation of air due to the arrangement of the holes, which influences its insect luring capacity.

US2009126257 A1 discloses a trap for luring, trapping, and killing insects. The trap includes: a single structure container defining a cavity that holds liquid, an opening that allows access to the cavity, a side wall, and a lid that seals the opening of the container. The side wall includes an orifice in the form of a frusto-conical shape that allows ingress of insects into the container and prevents egress of insects from the container. The side wall also includes a landing surface that directs insect towards the orifice.

US2008196296 A1 discloses a fruit fly trap whose exterior shape represents a piece of fruit such as an apple, orange, banana or the like. The trap housing includes a bottom base portion and a top cover portion. The cover contains various holes through which fruit flies can gain access to the interior of the trap. Located inside the trap is a natural product attractant stored within the interior of the trap. The construction of the trap is such that the liquid or powder attractant is retained inside the trap, so it will not spill out.

WO2007068329 A1 discloses a trapping device for frugivorous insects. The device comprises trapping means, and a single diffuser of attractant means arranged inside the trapping means. The diffuser is made up of a container containing inside a support material. This support material, which is of the porous type, is impregnated with a solution comprising a diaminoalkane, ammonium acetate and trimethylamine.

Therefore, the aim of the present invention is to provide a trap for insects that does not have to be assembled prior to use and whose insect luring capacity is not compromised by the arrangement of the holes.

### Description of the invention

The insect trap of the invention resolves the aforementioned drawbacks, having other advantages that will be described below.

The insect trap in accordance with the present invention comprises a receptacle defining at least one side wall and a base, said receptacle having a plurality of holes for the entrance of insects in the interior of the receptacle, and said holes are arranged perpendicularly with respect to the base of the receptacle.

This guarantees that insects are effectively lured by the air currents created by the arrangement of the holes.

Also, it does not require assembly before the first use and can be manufactured by moulding.

Said holes are arranged in corresponding cavities made in said at least one side wall of said receptacle.

Also, said cavities are elongated and each hole is arranged at the end of the cavities farthest from said base.

Preferably, the at least one side wall of said receptacle defines a truncated cone-shaped volume which allows piling various containers one inside the other for transport prior to use thereof.

Advantageously, said receptacle is made of plastic material, which allows its manufacturing by means of injection in a single-cavity formed mould, which affects investment and maintenance costs.

### Brief description of the drawings

In order to make the foregoing more readily understandable, it is accompanied by a set of drawings which, by way of illustration only and not limitation, represent a practical case of embodiment.

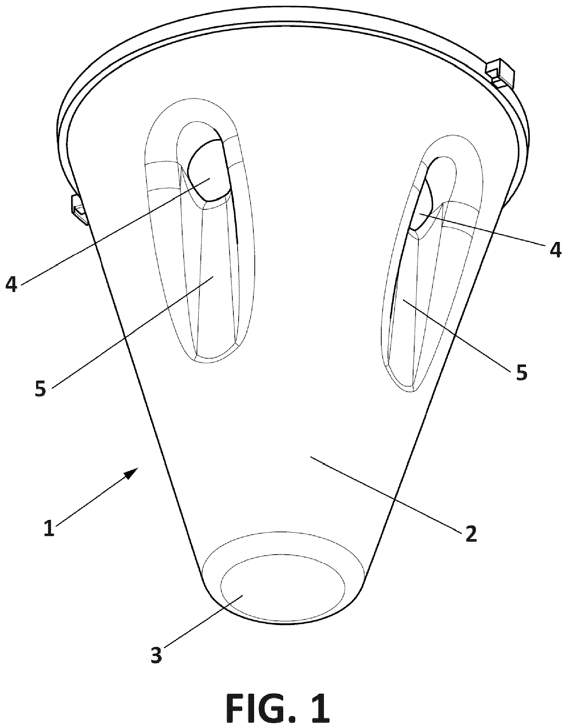

Figure 1 shows a perspective view of the insect trap in accordance with the present invention;
Figure 2 shows an elevational view of the insect trap in accordance with the present invention; and
Figure 3 shows a top plan view of the insect trap in accordance with the present invention.

### Description of a preferred embodiment

The figures show an embodiment of the insect trap in accordance with the present invention, which comprises a receptacle 1 that is closed by means of a lid, not represented in the figures.

Said receptacle 1 preferably has a truncated cone shape, defining a side wall 2 and a base 3. However, it should be noted that the receptacle 1 may adopt any adequate shape, for example, there could be more than one side wall defined, defining a substantially pyramidal shape. This shape is appropriate for piling the receptacles 1 one inside the other for the transport thereof, occupying a reduced space.

Said side wall 2 comprises a plurality of holes 4, arranged perpendicularly with respect to the base 3. Said holes 4 may adopt any appropriate shape, for example, elongated or similar.

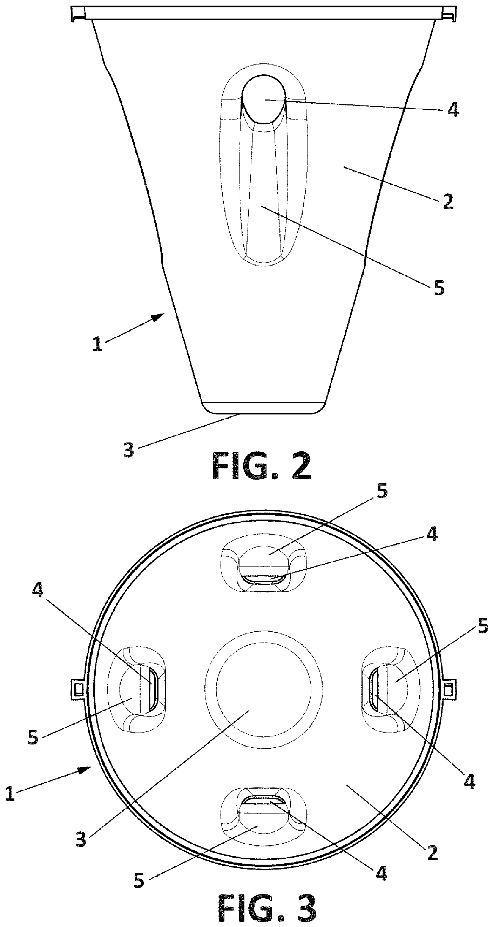

In accordance with the embodiment represented, there are four holes, disposed at a distance of 90° to each other, as can be observed in figure 3. However, the number of holes in the receptacle may be any appropriate number, in accordance with the dimensions thereof.

The side wall 2 also comprises cavities 5, which are elongated and perpendicular with respect to the base 3, said holes 4 being arranged at the end of the cavities 5 farthest from the base 3.

Said receptacle 1 is formed from a single three-dimensional piece, for example, made of plastic material, such that it may be manufactured by means of injection moulding and without requiring additional assembly prior to its first use.

Insect bait is arranged in the interior of the receptacle 1, which is introduced in the receptacle 1 through the holes 4. The perpendicular arrangement of the holes with respect to the base 3 enables the circulation of air, luring insects towards the interior of the receptacle 1.

Once inside the receptacle 1, the insects are trapped therein, since the arrangement of the holes 4 makes it difficult for the insects to escape therethrough and, additionally, there are also appropriate insecticides in the interior of the trap.

Despite the fact that reference has been made to a specific embodiment of the invention, it is evident for the person skilled in the art that the described insect trap is susceptible to many variations and modifications.

## Claims

1. An insect trap, which comprises a receptacle (1) defining at least one side wall (2) and a base (3), said receptacle (1) having a plurality of holes (4) for the entrance of insects in the interior of the receptacle (1), said holes (4) are disposed perpendicularly with respect to the base (3) of the receptacle (1),wherein said holes (4) are arranged in corresponding cavities (5) made in said at least one side wall (2) of said receptacle (1),
and said cavities (5) are elongated,
**characterized in that** the cavities (5) are perpendicular with respect to the base (3) and each hole (4) is arranged at the end of the cavities (5) farthest from said base (3).

2. The insect trap, according to claim 1, wherein the at least one side wall (2) of said receptacle (1) defines a truncated cone-shaped volume.

3. The insect trap, according to claim 1, wherein said receptacle (1) is made of plastic material.

## Patentansprüche

1. Insektenfalle, die einen Behälter (1) umfasst, der wenigstens eine Seitenwand (2) und eine Basis (3) definiert, wobei der Behälter (1) eine Vielzahl von Löchern (4) aufweist, durch die hindurch Insekten ins Innere des Behälters (1) gelangen können, wobei die Löcher (4) senkrecht in Bezug auf die Basis (3) des Behälters (1) angeordnet sind, wobei die Löcher (4) in entsprechenden Hohlräumen (5) angeordnet sind, die in der wenigstens einen Seitenwand (2) des Behälters (1) enthalten sind, und die Hohlräume (5) länglich sind, **dadurch gekennzeichnet, dass** die Hohlräume (5) senkrecht in Bezug auf die Basis (3) verlaufen und jedes Loch (4) an demjenigen Ende der Hohlräume (5), das am weitesten von der Basis (3) entfernt ist, angeordnet ist.

2. Insektenfalle gemäß Anspruch 1, wobei die wenigstens eine Seitenwand (2) des Behälters (1) ein Volumen in Form eines Kegelstumpfes definiert.

3. Insektenfalle gemäß Anspruch 1, wobei der Behälter (1) aus Kunststoff besteht.

## Revendications

1. Piège à insectes comprenant un récipient (1) définissant au moins une paroi latérale (2) et une base (3), le récipient (1) ayant une pluralité de trous (4) pour l'entrée des insectes à l'intérieur du récipient (1), les trous (4) étant disposés perpendiculairement par rapport à la base (3) du récipient (1), dans lequel lesdits trous (4) sont disposés dans des cavités respectives (5) formées dans ladite au moins une paroi latérale (2) dudit récipient (1), et lesdites cavités (5) sont allongées, **caractérisé en ce que** lesdites cavités (5) sont disposées perpendiculairement à ladite base (3) et chaque trou (4) est disposé à l'extrémité desdites cavités (5) la plus éloignée de ladite base (3).

2. Piège à insectes selon la revendication 1, dans lequel ladite au moins une paroi latérale (2) dudit récipient (1) définit un volume tronconique.

3. Piège à insectes selon la revendication 1, dans lequel ledit récipient (1) est en plastique.
